# EUROPÄISCHE PATENTSCHRIFT

(11) **EP 0 503 355 B1**
(45) Veröffentlichungstag und Bekanntmachung des Hinweises auf die Patenterteilung: **05.06.1996**
(21) Anmeldenummer: 92103136.5
(22) Anmeldetag: 25.02.1992
(51) Int. Cl.: G02B 6/42, H01L 33/00, H01L 31/0203

(54) **Optoelektrisches Bauelement**
Optoelectronic device
Dispositif optoélectronique

(30) Priorität: 09.03.1991 DE 4107637
(43) Veröffentlichungstag der Anmeldung: 16.09.1992
(73) Patentinhaber: Alcatel SEL Aktiengesellschaft, D-70435 Stuttgart (DE)
(72) Erfinder: Stebe, Heinz, W-7143 Vaihingen/Enz (DE)
(74) Vertreter: Pohl, Herbert, Dipl.-Ing

(56) Entgegenhaltungen:
- FR-A- 2 446 497
- PATENT ABSTRACTS OF JAPAN vol. 9, no. 141 (P-364)(1864) 15. Juni 1985 & JP-A-60 021 006
- IEEE TRANSACTIONS ON ELECTRON DEVICES. Bd. 32, Nr. 12, Dezember 1985, NEW YORK US Seiten 2707 - 2712; G.D.KHOE ET AL.: 'Laser-to-monomode-fiber coupling and encapsulation in a modified TO-5 package'
- OPTIVAL FIBER COMMUNICATION CONFERENCE, 1988 TECHNICAL DIGEST SERIES Bd. 1, 28. Januar 1988, NEW ORLEANS, LA, US Abstract THL3 ; J. SCHLAFER ET AL.:'Design and performance of diode laser and photodetector microwave packages'
- IEEE TRANSACTIONS ON COMPONENTS,HYBRIDS,AND MANUFACTURING Bd. 13, Nr. 4, Dezember 1990, NEW YORK US Seiten 798 - 806; M.R.MATTHEWS ET AL.: 'Optical components - the new challenge in packaging'

## Beschreibung

Die Erfindung betrifft ein optoelektrisches Bauelement der im Oberbegriff des Anspruchs 1 näher bezeichneten Ausführung. Solche Bauelemente werden insbesondere in Einrichtungen der optischen Nachrichtentechnik verwendet.

Ein optoelektrisches Bauelement nach dem Oberbegriff des Anspruchs 1 ist in der DE-OS 33 07 465 beschrieben. Es besteht im wesentlichen aus einem bolzenförmigen Sockel mit Flansch, den ein in Preßglas eingeschmolzener Anschlußdraht durchsetzt, einer sich an den Flansch anschließenden, halbzylinderförmigen Schale, einem in der Schale befestigten Montageblock mit optoelektrischem Wandler und einem sich vom Flansch aus erstreckenden Tragarm, auf dem eine die Glasfaser enthaltende Faserhülse befestigt ist. Eine am Flansch gasdicht befestigte Kappe verschließt die Anordnung hermetisch. Die bei dem optoelektrischen Bauelement verwendeten Einzelteile sind jedoch mit Ausnahme von Faserhülse und Kappe verhältnismäßig kompliziert gestaltet.

Außerdem ist aus der DE-OS 38 29 411 ein optoelektrisches Bauelement bekannt, das aus einer metallischen Bodenplatte, einem an der Bodenplatte befestigten Montageblock mit Laserdiode und einer mit der Bodenplatte verschweißten Metallkappe besteht. In dieser ist ein von einer Glasscheibe abgedecktes Fenster angeordnet, durch das hindurch das von der Laserdiode abgegebene Licht in eine Glasfaser einkoppelbar ist. Dies kann dadurch geschehen, daß das für sich hermetisch gekapselte Bauelement in den Flansch eines buchsenartigen Steckverbinders eingebaut wird, in den ein die Glasfaser enthaltender Steckerstift einführbar ist. Es handelt sich somit um ein optoelektrisches Bauelement mit einer Anordnung zur lösbaren Ankopplung der Glasfaser.

Der Erfindung liegt die Aufgabe zugrunde, ein optoelektrisches Bauelement mit integrierter Faserankopplung zu schaffen, das möglichst einfach aufgebaut und mechanisch robust ist und das mit geringen Herstellungskosten gefertigt werden kann. Diese Aufgabe wird erfindungsgemäß durch die im Anspruch 1 angegebenen konstruktiven Merkmale gelöst. Zweckmäßige Ausgestaltungen sind den Unteransprüchen zu entnehmen.

Das vorliegende optoelektrische Bauelement zeichnet sich durch eine vorteilhaft kleine Bauform aus. Es gestattet die Verwendung von mehreren handelsüblichen Einzelteilen. Die außerdem vorgesehenen, bauartbedingten Teile erfordern keinen besonderen Fertigungsaufwand, so daß das Bauelement als Massenprodukt preisgünstig produzierbar ist. Weitere Vorteile sind in der Beschreibung erwähnt.

Die Erfindung wird anhand eines in einer Zeichnung dargestellten Ausführungsbeispiels wie folgt näher beschrieben. In der Zeichnung zeigen:
- Fig. 1: ein optoelektrisches Bauelement mit integrierter Faserankopplung, teilweise längsgeschnitten, in der Seitenansicht;
- Fig. 2: das Bauelement der Fig. 1 ohne Kappe, in der Draufsicht.

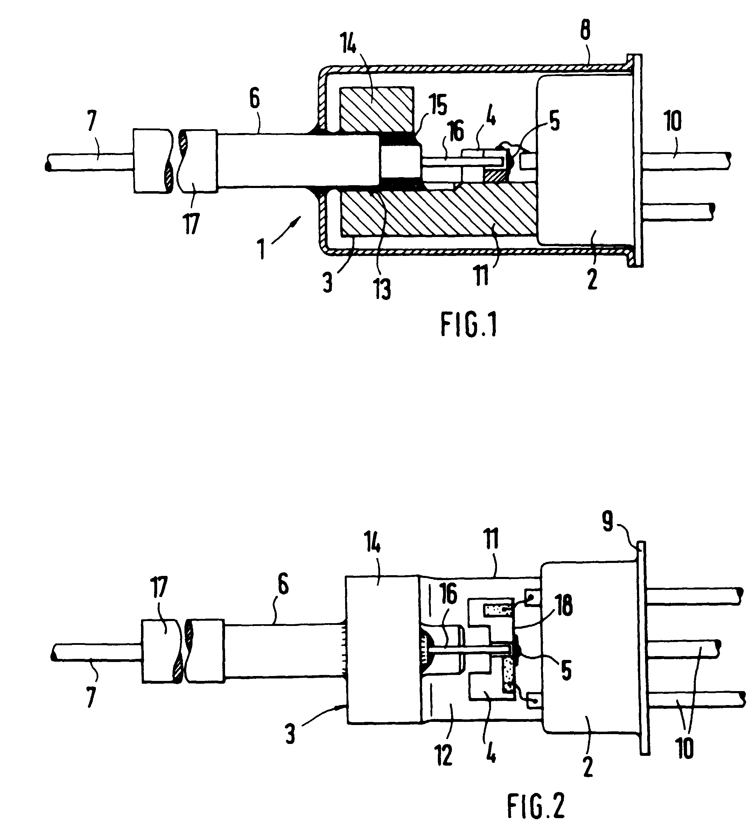

In Fig. 1 ist das optoelektrische Bauelement insgesamt mit 1 bezeichnet. Es besteht im wesentlichen aus einem Sockel 2, einem Basisteil 3 mit Montageblock 4 und optischem Wandler 5 sowie einer Faserhülse 6 mit Glasfaser 7 und einer die Anordnung abdeckenden Kappe 8.

Bei dem Sockel 8 handelt es sich um das untere Anschlußteil eines auf dem Markt erhältlichen, genormten TO-Sockels, wie er üblicherweise zur Herstellung von Transistoren verwendet wird. Er besteht aus Metall, hat für die Befestigung der Kappe 8 einen Flansch 9 und üblicherweise drei Anschlußdrähte 10, von denen einer den Sockel 2 kontaktiert und die beiden anderen in Preßglas eingeschmolzen den Sockel durchsetzen.

Das Basisteil 3 ist einstückig aus lötbarem Stangenmaterial hergestellt, das einen annähernd so großen Außendurchmesser wie der Sockel 2 hat. An einem Ende ist ein bis über die Mittelachse hinausgehendes Segment ausgeschnitten. Hierdurch wird ein vorderer, unterhalb der Mittelachse liegender Abschnitt 11 mit ebener Fläche 12 und ein rückwärtiger Abschnitt 14 gebildet, in den eine zentrische Bohrung 13 eingebracht wird. In diesem rohrförmigen Abschnitt 14 ist das vordere Ende der Faserhülse 6 mittels Lot 15 befestigt. Als Faserhülse 6 dient ein genormter, handelsüblicher Steckerstift, in dem die Glasfaser 7 so hermetisch dicht eingebettet ist, daß vorn ein blankes Faserende 16 daraus hervorsteht. Das hintere Hülsenende ist üblicherweise mit einem Bund 17 versehen, an dem ein als Knickschutz und Zugentlastung für die Glasfaser 7 dienender Schrumpfschlauch (nicht dargestellt) befestigt werden kann.

Der eingangs erwähnte Montageblock 4 ist auf der sich parallel zur Bohrungsachse erstreckenden ebenen Fläche 12 des Basisteiles 3 angeordnet. Er besteht aus elektrisch isolierendem Material, wie z.B. aus metallisierbarer Keramik mit einer Nut, vor der an einer Außenseite 18 des Montageblocks 4 der Wandler 5 fixiert ist. Als Wandler 5 dient eine handelsübliche Fotodiode entweder der Bauart für Fronteinstrahlung oder für Rückeinstrahlung.

Die Montage der wenigen Einzelteile des Bauelements 1 ist einfach. Zuerst wird beispielsweise der mit dem Wandler 5 bestückte Montageblock 4 auf der Fläche 12 des Basisteiles 3 befestigt. Dies kann in zwei Einbaulagen geschehen. Entweder so, daß die aktive Fläche des Wandlers 5 im rechten Winkel zur Faserachse steht oder durch eine geringe Schrägstellung des Montageblocks 4, die eine reflexionsarme Faserankopplung gewährleistet. Anschließend wird die Faserhülse 6 mit dem auf die aktive Fläche des Wandlers 5 ausgerichteten Faserende 16 in die Bohrung 13 des hinteren Abschnitts 14 eingelötet. Die so vervollständigte Anordnung stellt eine in sich mechanisch sehr robuste Faserankopplung dar, die anschließend mit der Stirnseite des vorderen Basisteilabschnitts 11 stoffschlüssig auf dem Sockel 2 befestigt wird, wobei keine engen Toleranzen zu beachten sind. Danach werden die Anschlüsse des Wandlers 5 auf dem Montageblock 4 mit den Enden der Anschlußdrähte 10 des Sockels 2 elektrisch miteinander verbunden und schließlich vom freien Ende der Glasfaser 7 die gelochte Kappe 8 soweit aufgeschoben, bis deren am offenen Ende nach außen weisender Rand gegen den Flansch 9 des Sockels 2 stößt. Durch Widerstandsschweißen werden Rand und Flansch 9 hermetisch dicht aneinander befestigt und der Spalt zwischen der Öffnung im Kappendeckel und der Faserhülse 6 gasdicht zugelötet.

## Patentansprüche

1. Optoelektrisches Bauelement (1) mit Faserankopplung, das aus einem Sockel (2) und einer daran hermetisch dicht befestigten Kappe (8) besteht, und das ein Basisteil (3) sowie einen auf dem Basisteil (3) fixierten Montageblock (4) mit optischem Wandler (5) und eine auf den Wandler (5) ausgerichtete Glasfaser (7) enthält, die in eine sich gasdicht durch die Kappe (8) erstreckende Faserhülse (6) eingebettet ist,
**dadurch gekennzeichnet**, daß das Basisteil (3) aus lötbarem Stangenmaterial besteht, dessen rohrförmiger Abschnitt (14) einen annähernd so großen Außendurchmesser wie der Sockel (2) hat, wobei der ebene Abschnitt (11) des Basisteils (3) durch einen über die Mittelachse hinausgehenden Ausschnitt im Stangenmaterial gebildet wird.

2. Bauelement nach Anspruch 1, dadurch gekennzeichnet, daß der Montageblock (4) aus elektrisch isolierendem Material besteht und eine Nut aufweist, vor der der Wandler (5) am Montageblock (4) fixiert ist.

3. Bauelement nach Anspruch 2, dadurch gekennzeichnet, daß der am Montageblock (4) fixierte Wandler (5) eine Fotodiode ist.

## Claims

1. Optoelectrical component (1) having fibre coupling, which component comprises a base (2) and a cap (8) attached thereto in a hermetically sealed manner and which component contains a base part (3) and a mounting block (4) which is fixed on the base part (3) and has an optical transducer (5) and a glass fibre (7) which is aligned with the transducer (5) and which is embedded in a ferrule (6) extending in a gastight manner through the cap (8), characterized in that the base part (3) is composed of solderable rod material whose tubular portion (14) has an external diameter which is approximately as large as the base (2), the flat portion (11) of the base part (3) being formed by a cutout in the rod material, which cutout extends beyond the central axis.

2. Component according to Claim 1, characterized in that the mounting block (4) is composed of electrically insulating material and has a groove, in front of which the transducer (5) is fixed on the mounting block (4).

3. Component according to Claim 2, characterized in that the transducer (5) fixed on the mounting block (4) is a photodiode.

## Revendications

1. Composant optoélectronique (1) comportant un couplage de fibre constitué d'un socle (2) et d'un capuchon (8) qui y est fixé de façon hermétiquement étanche, et contenant une partie de base (3) ainsi qu'un bloc de montage (4) fixé sur la partie de base (3) et comportant un convertisseur optique (5) et une fibre de verre (7) alignée sur le convertisseur (5), laquelle fibre est intégrée dans un gainage (6) s'étendant de manière étanche aux gaz à travers le capuchon (8), caractérisé en ce que la partie de base (3) est composée de barres soudables, dont le tronçon (14) tubulaire présente un diamètre extérieur approximativement identique à celui du socle (2), le tronçon (11) plan de la partie de base (3) étant formé dans les barres par un segment ressortant de l'axe central.

2. Composant suivant la revendication 1, caractérisé en ce que le bloc de montage (4) est composé d'un matériau électriquement isolant, et présente une gorge, devant laquelle est fixé le convertisseur (5) sur le bloc de montage (4).

3. Composant suivant la revendication 2, caractérisé en ce que le convertisseur (5) fixé sur le bloc de montage (4) est une photodiode.
